**Europäisches Patentamt**

**European Patent Office**

**Office européen des brevets**

(11) Veröffentlichungsnummer: **0 102 615**
**A1**

(12) **EUROPÄISCHE PATENTANMELDUNG**

(21) Anmeldenummer: **83108557.6**

(22) Anmeldetag: **31.08.83**

(51) Int. Cl.³: **C 05 F 3/06**

(30) Priorität: **04.09.82 DE 3232987**

(43) Veröffentlichungstag der Anmeldung:
**14.03.84 Patentblatt 84/11**

(84) Benannte Vertragsstaaten:
**IT**

(71) Anmelder: **Voss, Adolf, Dipl.-Ing.**
**In der Burmecke**
**D-5788 Winterberg 2(DE)**

(72) Erfinder: **Voss, Adolf, Dipl.-Ing.**
**In der Burmecke**
**D-5788 Winterberg 2(DE)**

(74) Vertreter: **Fritz, Herbert, Dipl.-Ing.**
**Mühlenberg 74**
**D-5760 Arnsberg 1(DE)**

(54) **Vorrichtung und Verfahren zur Herstellung von Festdünger aus Gülle.**

(57) Es ist ein kreiszylindrischer Behälter aus glasfaserverstärktem Kunststoff vorgesehen mit einer Abflußöffnung (14) im Behälterboden und einem eingebauten Siebboden (16), der vom Behälterboden Abstand hat. Zentrisch über dem Siebboden ist ein Filterrohr stehend eingebaut, dessen Öffnungen durch ein herausziehbares Abdeckrohr abgedeckt sind. Ein seitlich neben dem Behälter angeordnetes Regelrohr führt zu dem Raum unterhalb des Siebbodens. Ein Ventil (15) in der Abflußleitung wird durch eine Steuereinrichtung (23) gesteuert, die ihre Impulse einmal von einem Meßorgan (18) empfängt, das die Höhe der Feststoffdecke im Behälter mißt, und auch von einem Meßorgan (22), das den Pegelstand im Regelrohr mißt. Der getrocknete Feststoffkuchen wird über eine Austragöffnung (13) in der Behälterwand entnommen, weil die Möglichkeit besteht den Filterboden (16) zu drehen.

Fig.1

EP 0 102 615 A1

0102615

- 1 -

Herr
Dipl.-Ing. Adolf Voß
In der Burmecke
5788 Winterberg 2

======================================================
"Vorrichtung und Verfahren zur Herstellung von
Festdünger aus Gülle"
======================================================

Die vorliegende Erfindung geht aus von einer Vorrichtung
und einem Verfahren zur Herstellung von Festdünger aus
Gülle nach der deutschen Patentanmeldung P 29 43 962.1
und der Zusatz-Anmeldung dazu.

Der Behälter bei der Vorrichtung nach den vorgenannten
Patentanmeldungen ist ein befahrbares Betonbecken mit
korrisionsfester Auskleidung, im Grundriß rechteckig.
Wenn sich der Festdünger gebildet hat und getrocknet
ist, dann wird eine Wand des Betonbeckens entfernt und
der Festdünger von einem Trecker, der in das Betonbecken
einfährt, aufgenommen. Vor der Entnahme des Festdüngers
ist es erforderlich das Regelrohr, das sich im Behälter
befindet, und mehrere stehende Filterrohre wegzunehmen.

Die Aufgabe der vorliegenden Erfindung liegt insbesondere
in der Weiterentwicklung des vorgenannten Standes der
Technik bezüglich Vorrichtung und Verfahren, insbesondere
in Bezug auf eine Vereinfachung der Entnahme des Festdüngers und in Bezug auf eine Reduzierung der Verfahrensdauer.

Die Lösung der Aufgabe ergibt sich durch die Merkmale
nach den Patentansprüchen.

- 2 -

- 2 -

Der Behälter ist nach der Erfindung kreiszylindrisch und bietet in dieser Form die Möglichkeit zur Herstellung aus gewickeltem glasfaserverstärkten Kunststoff. Da dieser Werkstoff an sich weitgehend korrisionsbeständig ist, erübrigt sich ein besonderer korrisionsfester Belag. Die Entnahme des Festdüngers nach der Trocknung erfolgt seitlich durch eine Öffnung in der Behälterwand entweder durch Abschälen des Feststoffkuchens oder indem man den Feststoff sektorenweise absticht. Dadurch, daß der Filterboden drehbar ist, kann man den Festdünger absatzweise oder ständig zur Austragöffnung hin drehen. Beim Abschälen empfiehlt es sich nach jeder Lage das Abschälen zu unterbrechen, damit der Feststoff noch weiter austrocknen kann. Eine Abnahme des Regelrohres und des Filterrohres zum Zwecke der Ausräumung des Behälters ist nicht erforderlich. Wenn man das Verfahren mit Gülle durchführt, die in einer Bio-Gasanlage vorbehandelt ist, so wird die Zeitdauer vom Einfüllen bis zur Bildung einer Feststoffdecke erheblich reduziert gegenüber der Zeitdauer die man benötigt, wenn man das Verfahren mit unbehandelter Gülle durchführt. Die Bautechnik mit glasfaserverstärktem Kunststoff läßt es zu, Behälter jeden Durchmessers und jeder Höhe herzustellen.

Grundsätzlich kann der Behälter mit einem außerhalb angebrachten Regelrohr ausgeführt werden oder mit einem axial eingebauten Regelrohr. Bei einem außen angebrachten Regelrohr besteht die Möglichkeit zentrisch im Behälter ein Filterrohr anzubringen. Das eingebaute Regelrohr bringt den Vorteil mit sich, daß die Gefahr des Einfrierens der Flüssigkeit im Regelrohr vermieden wird.

Gemäß der weiteren Erfindung wird das erstmalige Bilden einer Feststoffdecke im Behälter mit Hilfe von zwei Elektroden gemessen, die in die Behälterfüllung eintauchen.

- 3 -

Mit diesen Elektroden wird der elektrische Widerstand gemessen. Da sich der elektrische Widerstand im Zuge der Verfestigung der Füllmasse verändert, kann der Zeitpunkt einer bestimmten Verfestigung der Füllmasse nach Belieben erfaßt werden.

Mit Hilfe einer schwenkbaren Förderschnecke oder eines Kratzbodens in Verbindung mit einem Schälmesser läßt sich der fertige Feststoff nach Beendigung des Verfahrens maschinell austragen. Während des Verfahrens können Feststoffe, die nach unten abgesunken sind und den Filterboden verstopfen, durch Einblasen von Preßluft (kurzzeitige Stöße) gelöst werden.

Im folgenden werden Ausführungsbeispiele der Erfindung näher beschrieben unter Bezugnahme auf die Zeichnungen.

Fig. 1        ist ein lotrechter Schnitt durch eine Vorrichtung nach der Erfindung;

Fig. 2        ist ein horizontaler Schnitt nach II von Fig. 1;

Fig. 3        zeigt einen lotrechten Schnitt durch einen Behälter mit einem eingebauten Regelrohr;

Fig. 4        ist ein Schnitt nach IV von Fig. 3;

Fig. 5        stellt den Bodenbereich des Behälters nach Fig. 3 in vergrößertem Maßstab dar.

Der Boden 10a eines im Querschnitt kreisrunden Behälters 10 aus glasfaserverstärktem Kunststoff hat zur Mitte hin eine schwache Neigung. In der Mitte ist eine Abflußöffnung 14 angeschlossen, die durch ein Bodenventil 15 abgesperrt werden kann. Der Behälter ist durch einen Deckel 11 verschließbar.

- 4 -

Mit Abstand vom Behälterboden 10a ist ein Filterboden
16 (Siebboden) eingebaut. Der Siebboden ist um die Behälterachse drehbar gehalten und kann mittels Antriebselementen 17 in Umdrehung versetzt werden.

In dem Raum zwischen Siebboden 16 und Deckel ist stehend
ein Filterrohr 19 eingebaut, an dem im unteren Bereich
Öffnungen 19a vorgesehen sind. Das Filterrohr 19 ist
konzentrisch von einem Abdeckrohr 20 umgeben, welches
in der gezeichneten Stellung die Öffnungen 19a abdeckt.
Die Öffnungen können durch Hochziehen des Abdeckrohres 20
geöffnet werden. Alternativ dazu kann man das Abdeckrohr auch drehbar einbauen. In diesem Falle werden die
Öffnungen 19a des Filterrohres dadurch frei gegeben werden, daß durch Drehen des Abdeckrohres die Filteröffnungen
mit entsprechenden Öffnungen im Abdeckrohr in Deckung gebracht werden.

Im Bereich des Zwischenraumes 25 zwischen Behälterboden
und Filterboden sind in der Behälterwand verschließbare
Belüftungsöffnungen 13 vorgesehen.

An den Zwischenraum 25 schließt ein stehendes Regelrohr
21 neben dem Behälter an. Der Zufluß zum Regelrohr kann
durch ein Ventil 24 abgesperrt werden.

In der Behälterwand über dem Filterboden 16 ist eine verschließbare Austragöffnung 12 vorgesehen, wo der Festdünger nach Beendigung des Verfahrens entnommen werden
kann.

In der Zeichnung ist schematisch ein Meßorgan 18 dargestellt, welches dann einen Impuls an eine Steuereinrichtung 23 gibt, wenn sich im Behälter durch einen Gärungsprozeß eine Feststoffdecke 1a gebildet hat. Das Meßorgan
18 tastet auch die Höhe dieser Feststoffdecke ab. Dem
Meßorgan 18 ist ein Meßorgan 22 im Regelrohr 21 zugeordnet, durch welches der Flüssigkeitsstand 2 im Regelrohr gemessen wird. Die Steuereinrichtung 23 steht mit dem Bodenventil 15 in Verbindung und veranlaßt das Öffnen bzw. Schließen dieses Ventils.

Das Verfahren beginnt damit, daß das Ventil 24 vor dem Regelrohr 21 geschlossen und Wasser in den Zwischenraum 25 etwa bis in Höhe des Filterbodens 16 eingefüllt wird. Das Ventil 15 ist dabei ebenfalls geschlossen.

Dann wird der Behälter mit Gülle voll gemacht, vorzugsweise mit einer solchen Gülle, die bereits in einer Bio-Gasanlage vorbehandelt wurde. Das Ventil 24 wird dann geöffnet, sodaß Flüssigkeit in das Regelrohr 21 gelangt. In diesem Zustand bleibt der Behälter einige Tage bis ein Gärungsprozeß stattfindet, was zur Folge hat, daß sich im oberen Bereich der Gülle eine Feststoffdecke 1a bildet. Das Meßorgan 18 spricht dann an, gibt einen Impuls zur Steuereinrichtung 23, die ein Öffnen des Bodenventils 15 veranlaßt, sodaß die flüssige Phase der Gülle ablaufen kann. In dem Maße wie die flüssige Phase der Gülle abläuft, sinkt der Pegelstand 2 im Regelrohr 21. Sobald die auf der Zeichnung angedeutete untere Stellung 2a erreicht ist, wird über die Steuereinrichtung 23 das Ventil 15 geschlossen. Nach und nach sinkt dann auch die Feststoffdecke 1a ab, was durch das Meßorgan 18 registriert und in die Steuereinrichtung 23 eingegeben wird.

Im Laufe der Zeit füllt sich der Zwischenraum 25 weiter mit flüssiger Phase, die auch im Regelrohr 21 ein Ansteigen des Pegels zur Folge hat. Sobald dieser Pegel etwa gleich hoch steht, wie der inzwischen weiter nach unten gelangte Pegel der Feststoffdecke, wird erneut das Ventil 15 automatisch geöffnet. Dieser Vorgang wiederholt sich so oft, bis die flüssige Phase der

- 6 -

Gülle weitgehend ausgelaufen ist und die Feststoffe sich in Form eines Kuchens 1b auf den Filterboden 16 abgelagert haben.

Eine Resttrocknung kann nun dadurch erfolgen, daß durch Hochziehen des Abdeckrohres 20 die Filteröffnungen 19a frei gegeben werden, sodaß weitere flüssige Phase über die Öffnungen 19a abfließen kann und eine weitere Trocknung des Feststoffkuchens eintritt. Beim Ziehen des Abdeckrohres 20 kann der Feststoffkuchen im mittleren Bereich trocknen. Im äußeren Bereich tritt eine Schrumpfung ein, sodaß sich der Feststoffkuchen von der Behälterwand löst und der Filterboden gedreht werden kann, ohne daß der Feststoffkuchen an der Behälterwand scheuert.

Eine weitere Durchlüftung erhält man durch Öffnen der Belüftungsöffnungen 13.

Die Entnahme kann über die Austragöffnung 12 erfolgen, entweder in der Weise, daß man den Feststoffkuchen 1b langsam und gleichmäßig dreht und dabei den Kuchen mit einem Messer im Bereich der Austragöffnung allmählich abschält oder, indem man den Kuchen absatzweise dreht und jeweils einen Sektor heraussticht. Hierdurch wird außerdem erreicht, daß der Feststoffkuchen weiter großflächig belüftet wird und abtrocknet. Dies kann auch durch ein Gebläse unterstützt werden.

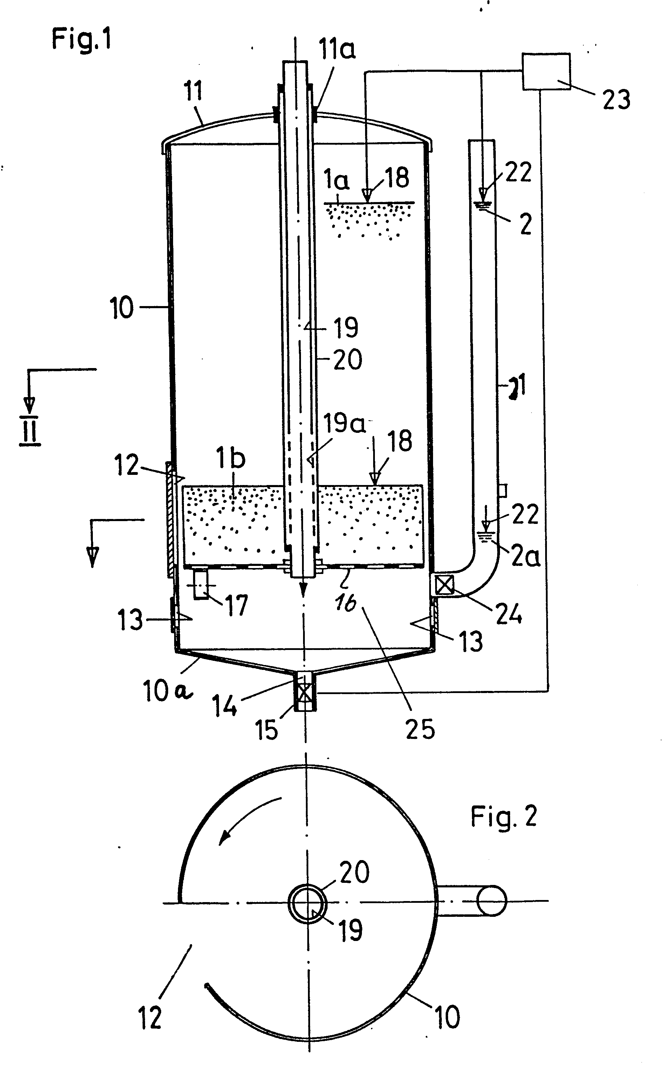

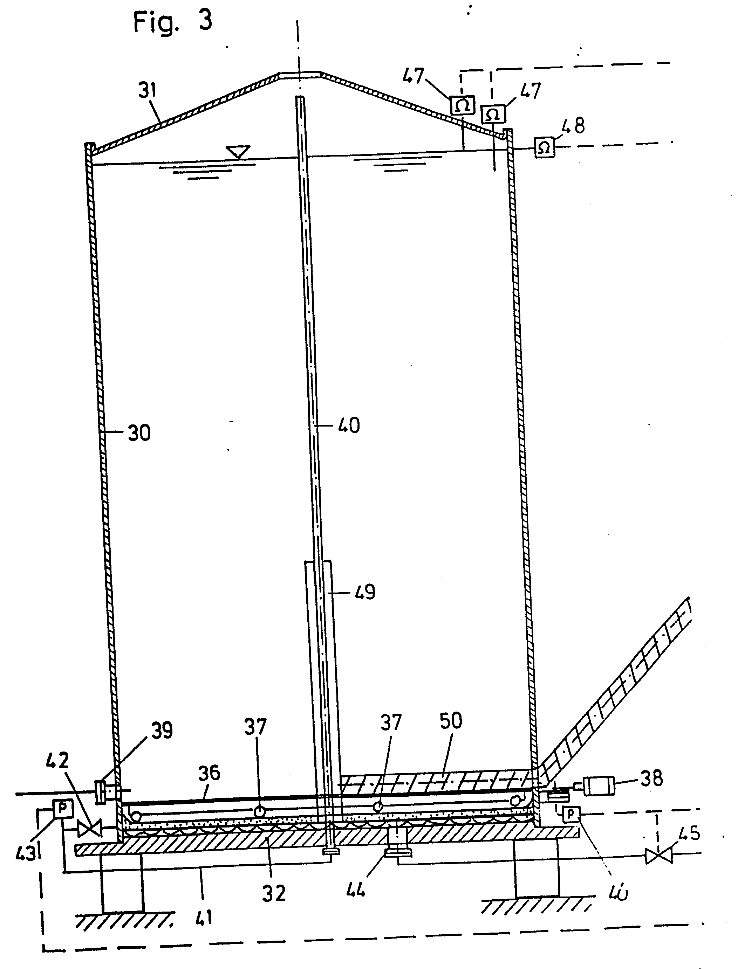

Der Behälter nach Figur 3 unterscheidet sich von dem Behälter nach Fig. 1 im wesentlichen durch das eingebaute Regelrohr 40. Es ist stehend fest am Behälterboden 32 angebracht. Über eine Umgehungsleitung 41 ist das Regelrohr mit dem Raum unterhalb des Filterbodens 36 verbunden. An die Leitung, die durch ein Ventil 42 abgesperrt werden kann, führt ein Meßorgan 43, mit dessen Hilfe der hydrostatische Druck in der Umgehungsleitung 41 und damit im Raum unterhalb des Filterbodens 36 gemessen werden kann.

Auf dem festen Behälterboden 32 sind mehrere Schichten aufgebracht und zwar eine Wärmedämmschicht 33, eine Folienschicht 34 und darauf eine Schicht aus Polyesterbeton 35. Auf dieser Schicht stützt sich der Filterboden 36 (Siebboden) mit Hilfe von Rollen 37 drehbar ab.

In der Behälterwand ist unten ein Füllstutzen 39, der auf Fig. 3 links unten erkennbar ist.

Der untere Bereich des Regelrohres 40 ist von einem fest eingebauten Schutzrohr 49 umgeben.

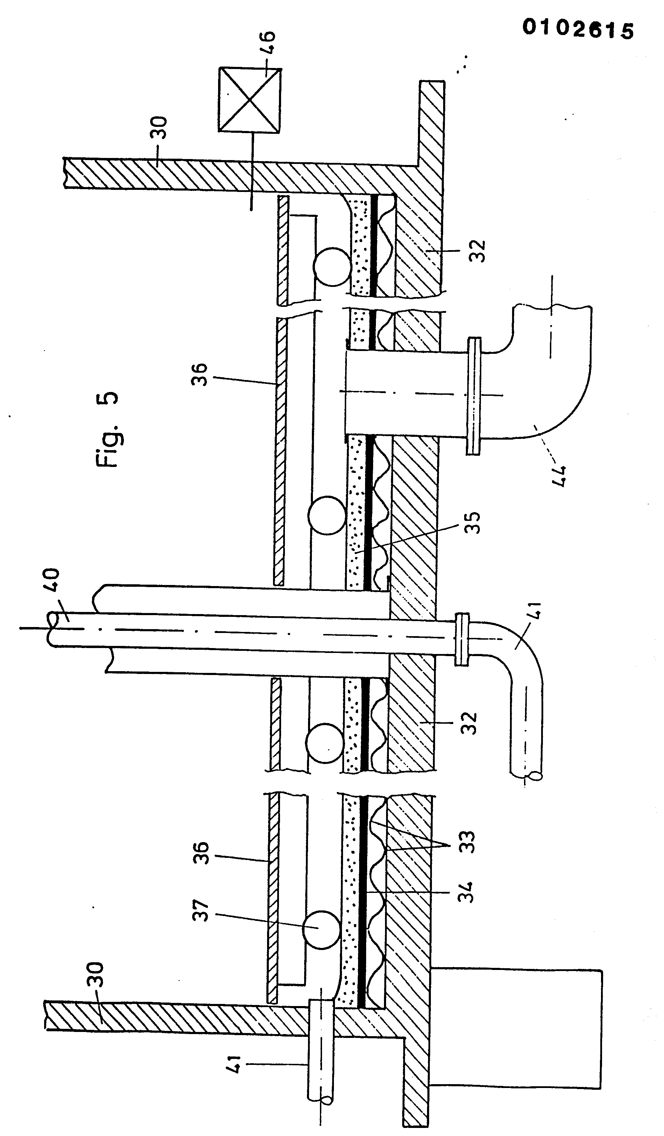

Die Abflußöffnung 44 mit Abflußleitung ist exzentrisch im Behälterboden eingebaut. Die Abflußleitung kann durch ein Ventil 45 geöffnet bzw. geschlossen werden. Mit dem Ventil 45 ist ein hydrostatisches Meßorgan 46 gekoppelt, das gemäß Fig. 5 den Druck über den Filterboden 36 mißt. Zur Austragung der Feststoffe nach der Trocknung ist eine Förderschnecke 50 vorgesehen.

Im Deckel 31 des Behälters sind zwei Elektroden 47 eingebaut, die in den maximalen Pegelstand der Behälterfüllung eintauchen und den elektrischen Widerstand der Füllung erfassen. Da sich dieser elektrische Widerstand im Zuge der Verfestigung der Füllmasse ändert, kann durch die beiden Elektroden 47 der Zeitpunkt erfaßt werden, bei dem die Füllmasse sich im oberen Bereich so weit verfestigt hat, daß durch Öffnen des Ventils 45 unten Flüssigphase abgezogen werden kann.

Eine Vorrichtung nach Fig. 3 wird im wesentlichen wie folgt betrieben.

- 8 -

Zunächst wird Wasser in den Behälter eingefüllt, zumindest bis in Höhe des Filterbodens 36. Dann wird die Gülle über den Stutzen 39 eingepumpt bis zur maximalen Füllhöhe. Danach wird das Ventil 42 geöffnet, sodaß sich der gleiche Pegelstand auch im Regelrohr 40 einstellt. Sobald das Elektrodenpaar 47 die erforderliche erstmalige Verfestigung angezeigt hat, wird das Ventil 45 geöffnet, sodaß Flüssigphase abläuft. Sobald die Flüssigphase vollständig abgelaufen ist und am Meßorgan 43 ein Druck von Null angezeigt wird, schließt das Ventil 45 wieder. Der Flüssigkeitspegel ist beim Ablaufen der Flüssigphase inzwischen abgesunken und hat einen tieferen Stand erreicht, der durch einen entsprechenden Druck am Meßorgan 46 angezeigt wird. Es tritt erneut eine Entwässerung der Füllmasse ein, d. h. Flüssigphase sammelt sich unterhalb des Filterbodens 36 an und gleichzeitig steigt der Flüssigkeitsstand im Regelrohr 40 wieder an. Wenn der Flüssigkeitsstand im Regelrohr 40 im wesentlichen den Höhenstand der Füllmasse im Behälter erreicht hat, d. h. wenn das hydrostatische Meßorgan 43 in der Umgehungsleitung 41 den gleichen Druck erreicht hat wie das Meßorgan 46, dann wird eine erneute Öffnung der Abflußleitung 44 veranlaßt, die solange anhält, bis der Druck am Organ 43 wieder Null geworden ist. Dieser Vorgang wiederholt sich so oft, bis die Flüssigkeit weitgehend aus der Füllmasse entfernt ist und ein Feststoffkuchen im gewünschten Maße vorliegt.

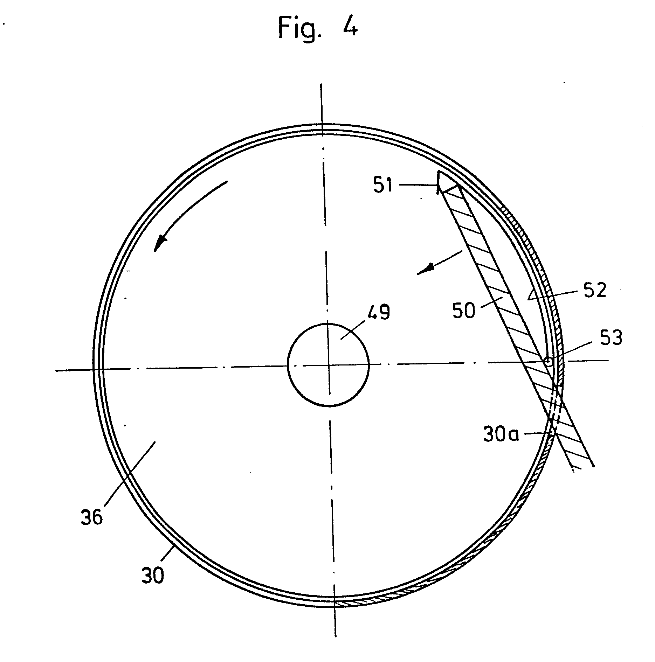

Figur 4 zeigt eine maschinelle Austragvorrichtung bestehend aus einem Schälmesser 51 mit einer Förderschnecke 50. Das Schälmesser 51 ist an einer Klappvorrichtung 52, die in einer horizontalen Ebene schwenkbar mittels Gelenk 53 an der Behälterwand neben der Austragöffnung 30a befestigt ist. Während der Feststoffkuchen sich dreht, schält das Schälmesser den Stoff von außen beginnend ab. Der gelöste Stoff wird dabei mit Hilfe der Förderschnecke nach draußen befördert. Durch die schwenkbare Anordnung des Schälmessers kann dieses allmählich vom Umfang des Behälters bis zu seinem Zentrum, d. h. bis zum Schutzrohr 49 bewegt werden.

Patentansprüche

1. Vorrichtung zur Herstellung von Festdünger aus Gülle mit den Merkmalen:

- es ist ein Behälter vorgesehen mit einer Abflußöffnung im Behälterboden und einem im Abstand vom Behälterboden eingebauten Siebboden (Filterboden);

- es ist ein Regelrohr vorgesehen, das sich an den Zwischenraum zwischen Behälterboden und Siebboden anschließt;

- es sind Steuerelemente zum Öffnen und Schließen eines Ventils an der Abflußöffnung vorgesehen in Abhängigkeit vom Stand einer Feststoffdecke im Behälter und einer Flüssigkeit im Regelrohr

gekennzeichnet durch die folgenden weiteren Merkmale:

- der Behälter (10) ist kreiszylindrisch;

- ein an sich bekanntes Filterrohr (19) mit Abdeckrohr (20) ist axial im Behälter über dem Filterboden eingebaut;

- das Regelrohr (21) ist außerhalb des Behälters;

- der Siebboden (16) ist drehbar mit Antriebselementen (17);

- über dem Siebboden ist verschließbar eine Austragöffnung in der Behälterwand.

2. Vorrichtung nach Anspruch 1, dadurch gekennzeichnet, daß zumindest der Behälter aus glasfaserverstärktem Kunststoff hergestellt ist.

3. Verfahren zur Herstellung von Festdünger aus Gülle
mit einer Vorrichtung nach Anspruch 1, dadurch gekennzeichnet, daß die Gülle in einer Bio-Gasanlage vorbehandelt ist.

4. Vorrichtung nach dem Oberbegriff des Anspruchs 1
gekennzeichnet durch folgende Merkmale:

- der Behälter (30) ist kreiszylindrisch, hat einen
  drehbaren Siebboden (36) mit Antriebselementen (38)
  und eine Austragsöffnung (30a) in der Behälterwand;

- ein am Behälterboden in axialer Anordnung befestigtes Regelrohr (40) ist über eine absperrbare Umgehungsleitung (41) an den Raum unterhalb des
  Siebbodens (36) angeschlossen;

- an die Umgehungsleitung (41) ist ein hydrostatisches Meßorgan (43) angeschlossen, das veranlaßt, daß bei fehlendem Wasserdruck das Ventil
  (45) der Abflußöffnung (44) geschlossen wird;

- ein weiteres hydrostatisches Meßorgan (46) ist
  an dem Behälterraum unmittelbar über dem Filterboden (36) angeschlossen und mit dem anderen
  hydrostatischen Meßorgan (43) derart gekoppelt,
  daß etwa bei Druckgleichheit das Ventil (45)
  geöffnet wird.

5. Vorrichtung nach Anspruch 1 oder 4, dadurch gekennzeichnet, daß im Behälterdeckel (31) zwei Elektroden
(47) eingebaut sind, die in die Behälterfüllung bei
maximalem Pegelstand eintauchen, auf eine Veränderung
des elektrischen Widerstandes der Füllung im Behälter ansprechen und bei Erreichen der Festphase eine
Öffnung des Ventils (45) in der Abflußleitung bewirken.

6. Vorrichtung nach Anspruch 1 oder 4, gekennzeichnet
durch die nachfolgenden Merkmale:

- ein Schälmesser (51) ist in einer horizontalen
  Ebene über dem Filterboden (36) von der Behälterwand bis zum zentrischen Bereich des Filterbodens
  schwenkbar;

- das Schälmesser befindet sich am Ende eines Armes
  (52), der an einem Gelenk (53) neben der Austragsöffnung (30a) befestigt ist;

- eine Förderschnecke (50) erstreckt sich vom Schälmesser durch die Austragsöffnung hindurch.

7. Verfahren zur Herstellung von Festdünger aus Gülle
mit einer Vorrichtung nach einem der vorhergehenden
Ansprüche, dadurch gekennzeichnet, daß in den Raum
unterhalb des Siebbodens stoßweise Druckluft eingeführt wird.

Fig.1

Fig. 2

0102615

Fig. 3

0102615

Fig. 4

0102615

Fig. 5

0102615

Europäisches Patentamt

# EUROPÄISCHER RECHERCHENBERICHT

Nummer der Anmeldung

EP 83 10 8557

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,D | DE-A-2 943 962 (KNEPPER) <br> * Figuren 1-4; Seite 1, Anspruch; Seite 15, Zeilen 22-29; Seite 16, Zeilen 14-30; Seite 17, Zeilen 1-30; Seite 19, Zeilen 4-17 * | 1 | C 05 F 3/06 <br> B 01 D 29/01 |
| | --- | | |
| Y | FR-A-2 204 442 (CELLECO) <br> * Figur 1; Seite 3, Zeilen 14-31 * | 1 | |
| | --- | | |
| Y | US-E- 25 761 (GENE HIRS) <br> * Figur 1; Spalte 2, Zeilen 11-37 * | 1,4 | |
| | --- | | |
| Y | FR-A-2 376 827 (SHATTOCK) <br> * Seite 2, Zeilen 29-40; Seite 3, Zeilen 1-12; Seite 5, Zeilen 33-38; Seite 6, Zeilen 1-10; Seite 7, Zeilen 31-38; Figuren 1,34 * | 1 | |
| | | | **RECHERCHIERTE SACHGEBIETE (Int Cl ³)** |
| | --- | | |
| A | DE-A-2 426 285 (SCHREIBER) | | C 05 F 3/06 <br> C 05 F 7/00 <br> C 05 F 13/00 <br> B 01 D 29/01 |
| | --- | | |
| A | DE-A-2 053 131 (STREICHER) | | |
| | ----- | | |

Der vorliegende Recherchenbericht wurde für alle Patentansprüche erstellt

| Recherchenort <br> DEN HAAG | Abschlußdatum der Recherche <br> 18-11-1983 | Prüfer <br> STEELANDT B. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82